# EUROPÄISCHE PATENTSCHRIFT

(11) **EP 1 508 049 B1**
(45) Veröffentlichungstag und Bekanntmachung des Hinweises auf die Patenterteilung: **12.11.2014**
(21) Anmeldenummer: 03720222.3
(22) Anmeldetag: 20.03.2003
(51) Int. Cl.: G01P 3/489, G01P 3/481, G01P 3/487

(54) **VERFAHREN UND ANORDNUNG ZUR DREHZAHLBESTIMMUNG MIT VERÄNDERLICHER SCHALT-HYSTERESE**
METHOD AND ASSEMBLY FOR DETERMINING ROTATIONAL SPEED WITH VARIABLE SWITCHING HYSTERESIS
PROCEDE ET SYSTEME POUR DETERMINER LA VITESSE DE ROTATION PAR HYSTERESIS DE COMMUTATION

(30) Priorität: 18.05.2002 DE 10222205
(43) Veröffentlichungstag der Anmeldung: 23.02.2005
(73) Patentinhaber: ROBERT BOSCH GMBH, 70442 Stuttgart (DE)
(72) Erfinder: BLOCK, Ruediger, 70825 Korntal-Muenchingen (DE); ANDRIOT, Christelle, 70825 Korntal-Muenchingen (DE); RETTIG, Rasmus, 70839 Gerlingen (DE); WALTER, Klaus, 74321 Bietigheim-Bissingen (DE)
(86) Internationale Anmeldenummer: PCT/DE2003/000926
(87) Internationale Veröffentlichungsnummer: WO 2003/098229

(56) Entgegenhaltungen:
- EP-A- 1 111 392
- DE-A- 3 930 895
- DE-A- 19 815 084
- US-A- 5 568 141
- US-B1- 6 215 297

## Beschreibung

### Stand der Technik

Die Erfindung betrifft ein Verfahren und eine Anordnung zur Erfassung der Bewegung eines Elements relativ zu einer Sensoranordnung, insbesondere zur Erfassung des Drehwinkels eines rotierenden Elements, nach dem Oberbegriff des Hauptanspruchs.

Solche Sensoranordnungen werden in unterschiedlichen Ausführungsformen beispielsweise in Fahrzeugen bereits angewandt. Zum Beispiel mit sog. Hall-Elementen als Drehzahlfühler an den Rädern für ein Antiblockierbremssystem (ABS), als Drehzahl- und Phasengeber für die Motorsteuerung oder als Lenkwinkelsensoren für sog. Fahrdynamikregelsysteme und für elektrische Lenkhilfen. Diese, beispielsweise aus der DE 197 50 304 A1 bekannten Sensoranordnungen, geben in der Regel digitale Signale, z. B. Schaltflanken, in Abhängigkeit von einem vor dem Sensor drehenden Geberrad aus.

Zu den wesentlichsten Anforderungen an diese Drehzahlsensoren im ABS sowie im Motor- und Getriebebereich gehört, insbesondere aufgrund der mechanischen Toleranzen, ein möglichst großer erreichbarer Luftspalt sowie eine hohe Immunität gegen Vibrationen. An diese Sensoranordnungen werden darüber hinaus eine Reihe von zum Teil gegensätzlicher Anforderungen gestellt, wobei ein hochempfindlicher Sensor an sich auch hochempfindlich für eine Anregung durch die das Messergebnis störenden Vibrationen ist. Die volle Funktionalität soll dabei einerseits für sehr große Luftspalte, d. h. ein sehr empfindlicher Sensor, erreicht werden und andererseits wird für kleine Luftspalte gefordert, dass hier bei einem großen Sensorsignal keine fehlerhaften Signale durch Vibrationen auftreten dürfen.

Um die Empfindlichkeit solcher Sensoranordnungen gegenüber Vibrationen zu minimieren, wird bei herkömmlichen Drehzahlsensoren oft eine variable Hysterese eingesetzt. Hierbei muss zunächst die Signalamplitude gemessen werden und danach wird die Hysterese flexibel angepasst. Für große Eingangssignale wird dann eine große Hysterese und für kleine Eingangssignale wird eine entsprechend verringerte Hysterese gewählt, d. h., es wird bei einem kleinen Luftspalt, die zum Schalten notwendige Amplitude erhöht. Gleichzeitig besteht insbesondere auch bei einem Stillstand des Geberrades die Forderung nach einer Immunität des Sensors gegenüber Vibrationen, was zunächst einer hohen Empfindlichkeit entgegen steht und die Realisierung einer großen Schalthysterese erforderlich macht.

Weiterhin wird verlangt, dass der realisierte Sensor gegenüber kurzzeitigen Signaländerungen, insbesondere einer deutlichen Amplitudenverringerung im Betrieb, unempfindlich ist. Daher ist ein wesentlicher Nachteil dieser Methode mit einer flexiblen Hysterese der Verlust der Immunität insbesondere gegen Luftspaltschläge im Betrieb, die kurzzeitig eine solche erhebliche Verringerung der Signalamplitude erzeugen können. Durch eine zuvor erhöhte Hysterese im Schaltpunkt des Sensors kann es dann bei einem solchen Luftspaltschlag eventuell zum Signalverlust bzw. zu einem Signalabriss kommen.

Weiterhin lässt sich die Methode mit einer anpassbaren Hysterese nur nach erfolgter Kalibrierung des Sensors anwenden, da erst nach der Kalibrierung die Signalamplitude bekannt ist. Zur korrekten Einstellung der Hysterese müsste der Sensor jedoch zunächst die Signalamplitude messen. Da direkt nach dem Einschalten noch keine Messwerte vorliegen, muss im Sensor ein Startwert, üblicherweise das Minimum, für die Hysterese gewählt werden. Das bedeutet jedoch gleichzeitig, dass der Sensor in diesem Zustand sehr vibrationsempfindlich ist.

Darüber hinaus verliert der Sensor durch eine erhöhte Hysterese bei einer magnetischen Stimulation (d. h. während das Geberrad dreht) ebenfalls seine Robustheit gegenüber Luftspaltschlägen, die die Signalamplitude über wenige Perioden drastisch reduzieren können.

Zum Beispiel ist aus der US 5,451,891 A1 bekannt, dass eine adaptive, von der Signalamplitude abhängige Hysterese benutzt wird. Hier wird ein Kopplungsfaktor als Quotient aus der gemessenen Sensoramplitude und der Frequenz bestimmt und basierend auf diesem Kopplungsfaktor wird die Hysterese proportional zum Produkt aus Kopplungsfaktor und Frequenz eingestellt. Mit dieser bekannten Methode kann lediglich das Verhalten passiver Sensoren ausgeglichen werden, die für niedrige Anregungsfrequenzen ein sehr kleines Signals liefern und für hohe Frequenzen eine sehr große Amplitude ausgeben. Es kann jedoch nicht das Verhalten von Sensoren, die unabhängig von der Signalfrequenz eine konstante interne Signalamplitude liefern, verbessert werden.

Weiterhin ist aus der US 6 215 297 B1 bekannt, dass bei einer Sensoranordnung zur berührungslosen Drehzahlerfassung eine Veränderung des Luftspaltes zwischen dem bewegten Element und dem Sensor, beispielsweise durch eine dynamische Verformung, mittels einer Testhysterese berücksichtigt wird. Hierbei wird mittels der betragsmäßig gegenüber der Betriebshysterese fest vorgegebenen größeren Testhysterese durch willkürliche Umschaltung ermittelt, ob die Signalamplitude noch im Erfassungsbereich liegt, d. h. ob eventuell durch einen vergrößerten Luftspalt ein Signalausfall zu erwarten ist.

Aus der DE 198 15 084 A1 ist zu entnehmen, dass bei einer Drehzahlerfassung verschiedene Signalaufbereitungsnetzwerke vorhanden sind, die in Abhängigkeit von der Signalfrequenz über einen Schalter jeweils ausgewählt werden. Dies erfolgt, damit in unterschiedlichen Frequenzbereichen auch unterschiedliche jeweils angepasste Signalverarbeitungen vorgenommen werden können.

Die EP 1 111 392 A1 beschreibt einen berührungslosen Drehzahlsensor bei dem Abtastmarken eines Rades detektiert werden, wobei auch hier bezüglich der abgetasteten Impulse Schaltschwellen für die nachgeschaltete Sensoranordnung vorhanden sind. Diese Schaltschwellen werden über eine Regelanordnung derart angepasst, dass ein Offset oder eine Langzeitdrift des Sensors ausgeglichen werden können.

### Vorteile der Erfindung

Die Erfindung betrifft eine Weiterbildung eines eingangs erwähnten Verfahrens zur Erfassung der Bewegung eines Elements relativ zu einer Sensoranordnung, bei dem Schaltsignale in Abhängigkeit von einem vor dem Sensor vorbeibewegten Impulsgeber ausgewertet werden und eine Anpassung einer Schalthysterese bei der Auswertung in Abhängigkeit von den Werten des Schaltsignals vorgenommen wird.

In vorteilhafter Weise wird gemäß der Erfindung bei einer Bewegung des Elements aus einem Stillstand unterhalb eines vorgegebenen Grenzwertes eine relativ große Schalthysterese als Starthysterese und bei Überschreiten des Grenzwertes eine verringerte Schalthysterese eingestellt. Der Kern der Erfindung liegt somit in der Einführung einer frequenzabhängigen Hysterese, die ggf. durch eine amplitudenabhängige ergänzbar ist. Vorzugsweise ist der vorgegebene Grenzwert eine Grenzfrequenz für die gemessenen Schaltsignale, die insbesondere bei der Erfassung der Bewegung eines drehbaren Elements, z. B. ein Drehzahlfühler in einem Kraftfahrzeug, als Schaltsignale eines Geberrades als Impulsgeber ausgewertet werden.

Es kann hiermit auf einfache Weise erreicht werden, dass eine hohe Vibrationsimmunität, d. h. es entstehen keine zusätzlichen Vibrationsimpulse, unterhalb der Grenzfrequenz im wesentlichen im Stillstand besteht und dabei eine große Robustheit gegenüber Luftspaltschlägen oberhalb dieser Grenzfrequenz gewährleistet ist, d. h., es gibt keine fehlenden Pulse. Neben der Auswertung der Signalfrequenz in Bezug auf die Grenzfrequenz kann auch eine beliebige Art von Stillstandserkennung genutzt werden, um die Aktivierung der relativ großen Starthysterese zu erreichen.

Erfindungsgemäß wird zur Bestimmung der relativ großen Schalthysterese als Starthysterese eine zuvor gemessene Amplitude des Schaltsignals herangezogen und gemäß einer vorteilhaften Ausführungsform kann für die verringerte Schalthysterese nach dem Überschreiten des Grenzwertes ein fester Wert herangezogen werden.

### Zeichnung

Ein Ausführungsbeispiel der Erfindung zur Erfassung der Bewegung eines Elements relativ zu einer Sensoranordnung wird anhand der Zeichnung erläutert. Es zeigen:
Figur 1 ein Diagramm des Verlaufs eines Sensorsignals der Sensoranordnung und einer Schalthysterese über der Zeit, wobei das Sensorsignal aus Schaltsignalen während des Stillstandes und der Drehbewegung eines Geberrades gebildet ist,
Figur 2 ein Diagramm des Verlaufs der Schalthysterese in Abhängigkeit von der Frequenz bei der Auswertung des Sensorsignals,
Figur 3 ein Diagramm des Verlaufs einer von der Amplitude des Sensorsignals abhängigen Schalthysterese und
Figur 4 ein Ablaufdiagramm zur Bestimmung der Schalthysterese.

### Beschreibung des Ausführungsbeispiels

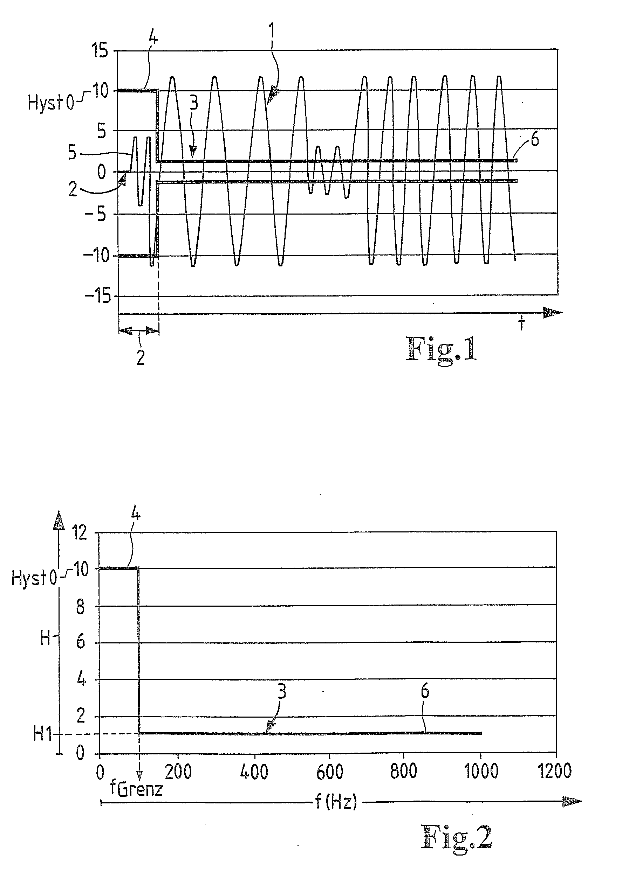

In Figur 1 ist ein Diagramm des Verlaufs 1 eines Sensorsignals der Sensoranordnung über der Zeit t gezeigt, das hier bei der Erfassung der Drehbewegung eines im Prinzip aus dem Stand der Technik bekannten Geberrades, z. B. zur Erzeugung von Impulsen für vorgegebene Drehwinkel, ermittelt wird. Im linken Teil des Diagramms nach der Figur 1 ist ein Bereich 2 als Stillstand des hier nicht dargestellten Geberrades definiert. Dieser Bereich 2 kann zum Beispiel als Bereich unterhalb eines vorgegebenen Grenzwertes f_{Grenz} definiert werden, wie er parallel dazu in Figur 2 angedeutet ist.

Die Figur 2 zeigt den Verlauf 3 einer Schalthysterese H in Abhängigkeit von der Frequenz f bei der Auswertung des Sensorsignals 1 nach der Figur 1. Im Bereich 2 ist eine relativ große Schalthysterese 4 als Hyst0 gewählt, so dass Vibrationen 5 nicht zu einigen das Messergebnis verfälschenden Signalen führen.

Nach einem Verlassen des Stillstandsbereichs 2 nach der Figur 1 bzw. nach dem Überschreiten des Grenzwertes f_{Grenz} nach der Figur 2 wird dann eine verringerte Schalthysterese H1 im Bereich 6 eingestellt. Die Figur 2 zeigt somit eine feste Hysterese H = Hyst0 für eine Signalfrequenz f < f_{Grenz} und eine feste Hysterese H = H1 für f >= f_{Grenz}.

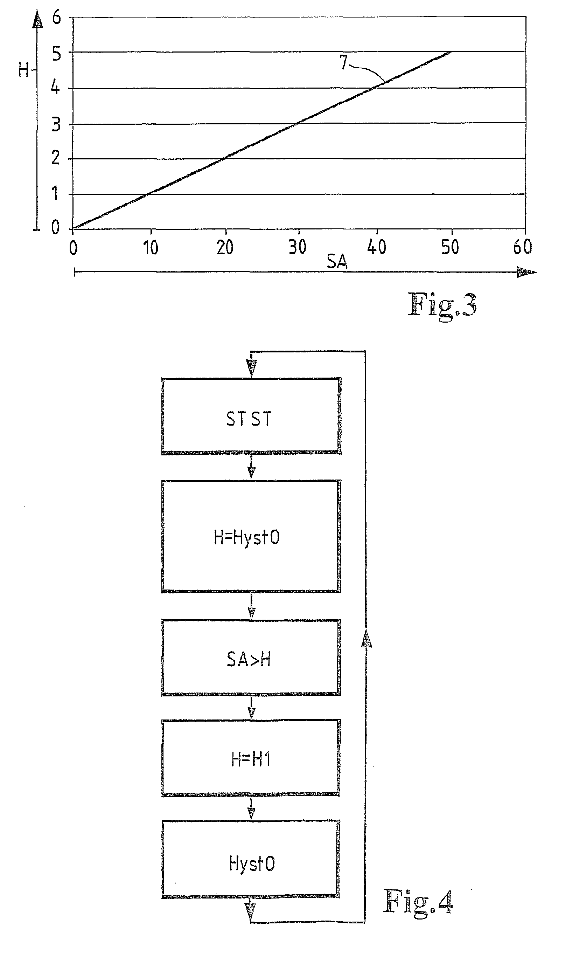

Aus Figur 3 ist eine Kombination der festen Hysterese H nach der Figur 2 mit einer amplitudenabhängigen Hysterese H gezeigt. Es ist ein Verlauf 7 der Hysterese H über der Signalamplitude SA dargestellt. Hier erfolgt eine Anpassung der festen Hysterese H = Hyst0 auf der Basis einer zuvor gemessenen Signalamplitude SA, d. h., die feste Hysterese Hyst0 ist eine Funktion der Amplitude. Falls die Messung der Signalamplitude SA vorher nicht möglich war, z. B. direkt nach dem Einschalten der Sensoranordnung, kann diese durch eine Wahl eines voreingestellten Wertes (Defaultwert) erfolgen.

In Figur 4 ist ein Ablaufdiagramm zur Funktionsweise eines erfindungsgemäßen Sensors einschließlich der Bestimmung der anhand der Figuren 1 bis 3 erläuterten Schalthysterese H dargestellt. Beginnend mit der Erkennung eines Stillstandes STST, z. B. f < f_{Grenz}, wird zunächst die große Schalthysterese Hyst0 eingestellt. Dann wird aus der gemessenen Signalamplitude SA (vgl. Position 1 aus der Figur 1) eine Bewegung des Geberrades erkannt und sodann die Schalthysterese H auf den Wert H1 verringert. Aus der dann gemessenen Signalamplitude SA kann ein neuer Wert für Hyst0 ermittelt werden, der bei einem erneuten Stillstand herangezogen wird.

## Patentansprüche

1. Verfahren zur Erfassung der Bewegung eines Elements relativ zu einer Sensoranordnung, bei dem
- Schaltsignale (1) in Abhängigkeit von einem vor dem Sensor vorbeibewegten Impulsgeber ausgewertet werden und
- eine Anpassung einer Schalthysterese (H) bei der Auswertung in Abhängigkeit von den Werten des Schaltsignals (1) vorgenommen wird,
wobei sich
- bei einer Bewegung des Elements aus einem Stillstand unterhalb eines vorgegebenen Grenzwertes eine relativ große Schalthysterese als Starthysterese (Hyst0) und bei Überschreiten des Grenzwertes eine verringerte Schalthysterese (H1) einstellt,
**dadurch gekennzeichnet, dass** zur Bestimmung der relativ großen Schalthysterese als Starthysterese (Hyst0) eine zuvor gemessene Amplitude des Schaltsignals (1) herangezogen wird.

2. Verfahren nach Anspruch 1, **dadurch gekennzeichnet, dass**
- der vorgegebene Grenzwert eine Grenzfrequenz (fGrenz) für die gemessenen Schaltsignale (1) ist.

3. Verfahren nach Anspruch 1 oder 2, **dadurch gekennzeichnet, dass**
- zur Erfassung der Bewegung eines drehbaren Elements die Schaltsignale (1) eines Geberrades als Impulsgeber ausgewertet werden.

4. Verfahren nach einem der Ansprüche 1 oder 2, **dadurch gekennzeichnet, dass**
- für die verringerte Schalthysterese (H1) nach Überschreiten des Grenzwertes (fGrenz) ein fester Wert herangezogen wird.

5. Sensoranordnung zur Durchführung eines Verfahrens nach einem der Ansprüche 1 - 4, wobei die Sensoranordnung so ausgebildet ist, dass
- Schaltsignale (1) in Abhängigkeit von einem vor dem Sensor vorbeibewegten Impulsgeber ausgewertet werden, dass
- eine Anpassung einer Schalthysterese (H) bei der Auswertung in Abhängigkeit von den Werten des Schaltsignals (1) vornehmbar ist, und dass sich
- bei einer Bewegung des Elements aus einem Stillstand unterhalb eines vorgegebenen Grenzwertes eine relativ große Schalthysterese als Starthysterese (Hyst0) einstellt
- und bei Überschreiten des Grenzwertes eine verringerte Schalthysterese (H1) einstellt,
- wobei die Sensoranordnung berührungslose Sensoren mit Hall-Elementen oder magnetoresistiven Elementen aufweist,
**dadurch gekennzeichnet, dass** zur Bestimmung der relativ großen Schalthysterese als Starthysterese (Hyst0) eine zuvor gemessene Amplitude des Schaltsignals (1) herangezogen wird.

6. Sensoranordnung nach Anspruch 5, **dadurch gekennzeichnet, dass**
- die Sensoranordnung als Drehzahlfühler in einem Kraftfahrzeug eingesetzt ist.

## Claims

1. Method for detecting the movement of an element relative to a sensor arrangement, in which
- switching signals (1) are evaluated as a function of a pulse transmitter which is moved past in front of the sensor, and
- a switching hysteresis (H) is adapted as a function of the values of the switching signal (1) during the evaluation,
wherein
- during a movement of the element from a stationary state, a relatively large switching hysteresis is set as a starting hysteresis (Hyst0) below a predefined limiting value, and when the limiting value is exceeded, a reduced switching hysteresis (H1) is set,
**characterized in that** in order to determine the relatively large switching hysteresis as starting hysteresis (Hyst0), a previously measured amplitude of the switching signal (1) is used.

2. Method according to Claim 1, **characterized in that**
- the predefined limiting value is a limiting frequency (fGrenz) for the measured switching signals (1).

3. Method according to Claim 1 or 2, **characterized in that**
- in order to detect the movement of a rotatable element, the switching signals (1) of an encoder wheel as the pulse transmitter are evaluated.

4. Method according to one of Claims 1 and 2, **characterized in that**
- a fixed value is used for the reduced switching hysteresis (H1) after the limiting value (fGrenz) has been exceeded.

5. Sensor arrangement for carrying out a method according to one of Claims 1 - 4, wherein the sensor arrangement is embodied in such a way that
- switching signals (1) are evaluated as a function of a pulse transmitter which is moved past in front of the sensor,
in that
- a switching hysteresis (H) can be adapted as a function of the values of the switching signal (1) during the evaluation, and in that
- during a movement of the element from a stationary state, a relatively large switching hysteresis is set as a starting hysteresis (Hyst0) below a predefined limiting value,
- and when the limiting value is exceeded, a reduced switching hysteresis (H1) is set,
- wherein the sensor arrangement has contactless sensors with Hall elements or magneto-resistive elements,
**characterized in that** in order to determine the relatively large switching hysteresis as starting hysteresis (Hyst0), a previously measured amplitude of the switching signal (1) is used.

6. Sensor arrangement according to Claim 5, **characterized in that**
- the sensor arrangement is used as a rotational speed sensor in a motor vehicle.

## Revendications

1. Procédé de saisie du déplacement d'un élément par rapport à un ensemble de capteurs, dans lequel
des signaux de commutation (1) sont évalués par un émetteur d'impulsions passé devant le capteur,
pendant l'évaluation, une adaptation d'une hystérèse de commutation (H) est réalisée en fonction des valeurs du signal de commutation (1),
une hystérèse de commutation relativement grande étant établie en tant qu'hystérèse initiale (Hyst0) lorsque l'élément se déplace depuis l'arrêt jusqu'en dessous d'une valeur limite prédéterminée et une hystérèse de commutation réduite (H1) s'établissant lorsque la valeur limite est dépassée,
**caractérisé en ce que**
l'amplitude du signal de commutation (1) mesurée préalablement intervient dans la détermination de l'hystérèse de commutation relativement grande utilisée comme hystérèse initiale (Hyst0).

2. Procédé selon la revendication 1, **caractérisé en ce que** la valeur limite (fGrenz) prédéterminée est la fréquence Grenz mesurée sur les signaux de commutation (1).

3. Procédé selon les revendications 1 ou 2, **caractérisé en ce que** les signaux de commutation (1) d'une roue émettrice servant d'émetteurs d'impulsions sont évalués pour saisir le déplacement d'un élément rotatif.

4. Procédé selon l'une des revendications 1 ou 2, **caractérisé en ce que** pour l'hystérèse de commutation (H1) réduite, une valeur fixe intervient après dépassement de la valeur limite (fGrenz).

5. Ensemble de capteurs servant à mettre en oeuvre le procédé selon l'une des revendications 1 à 4, l'ensemble de capteurs étant configuré de manière à
évaluer des signaux de commutation (1) en fonction d'un émetteur d'impulsions passé devant le capteur,
lors de l'évaluation, pouvoir réaliser une adaptation d'une hystérèse de commutation (H) en fonction des valeurs du signal de commutation (1),
établir une hystérèse de commutation relativement grande en tant qu'hystérèse initiale (Hyst0) lorsque l'élément est déplacé depuis l'arrêt jusqu'en dessous d'une valeur limite prédéterminée et
établir une hystérèse de commutation (H1) réduite lorsque la valeur limite est dépassée,
l'ensemble de capteurs présentant des capteurs sans contact dotés d'éléments Hall ou d'éléments magnétorésistifs,
**caractérisé en ce que**
l'amplitude du signal de commutation (1) mesurée préalablement intervient dans la détermination de l'hystérèse de commutation relativement grande utilisée comme hystérèse initiale (Hyst0).

6. Ensemble de capteurs selon la revendication 5, **caractérisé en ce que** l'ensemble de capteurs est utilisé comme sonde de vitesse de rotation dans un véhicule automobile.
